# EUROPEAN PATENT SPECIFICATION

(11) **EP 2 426 482 B1**
(45) Date of publication and mention of the grant of the patent: **17.06.2020**
(21) Application number: 11177232.3
(22) Date of filing: 11.08.2011
(51) Int. Cl.: G01N 21/89, G01B 11/10, G01B 11/30, G01B 11/06

(54) **TEXTILE-MATERIAL MONITORING DEVICE AND YARN WINDING APPARATUS**
TEXTILMATERIAL-ÜBERWACHUNGSVORRICHTUNG UND GARNWICKELVORRICHTUNG
DISPOSITIF DE SURVEILLANCE DE MATÉRIAU TEXTILE ET APPAREIL D'ENROULEMENT DE FILS

(30) Priority: 06.09.2010 JP 2010199055
(43) Date of publication of application: 07.03.2012
(73) Proprietor: Murata Machinery, Ltd., Kyoto-shi, Kyoto 6018326 (JP)
(72) Inventor: Nakade, Kazuhiko, Kyoto, 612-8686 (JP)
(74) Representative: Zimmermann, Tankred Klaus

(56) References cited:
- EP-A1- 1 508 797
- JP-A- 2006 329 696
- US-A1- 2006 014 085

## Description

### BACKGROUND OF THE INVENTION

### 1. Field of the Invention

The present invention generally relates to textile-material monitoring devices. More particularly, the invention relates to a structure of a diffuser member that diffuses light, with which a textile material is to be irradiated, in a textile-material monitoring device.

### 2. Description of the Related Art

Some winding apparatuses that wind a textile material, such as a spun yarn, include a textile-material monitoring device for detecting a foreign matter present in the textile material and a thickness irregularity of the textile material. As an example of a structure for detecting the thickness irregularity and the foreign matter, an optical monitoring device is known that includes a light emitting diode (LED) to irradiate the spun yarn with light to thereby detect the thickness irregularity based on a change in an amount of light transmitted through the spun yarn and to detect the foreign matter based on a change in an amount of light reflected from the spun yarn. The change in the amount of the transmitted light and the change in the amount of the reflected light are converted into respective electrical signals by a light receiving element, such as a photodiode.

The detection of the foreign matter by using the reflected light is performed by utilizing a difference in reflectance between the textile material and the foreign matter. For example, when a colored foreign matter is present in a white spun yarn, the amount of the reflected light decreases in a portion where the foreign matter is present; accordingly, the foreign matter can be detected by measuring a change in an amount of the reflected light.

Meanwhile, it is common that a textile material has surface irregularities. The irregularities when irradiated with light sometimes form a shadow on the surface of the textile material depending on a positional relationship between a light source and a light receiving element. Such a shadow leads to a reduction in the amount of received light of reflected light from the surface of the textile material. Accordingly, the shadow may result in a false detection that a black foreign matter is present in the textile material. If a foreign matter is detected, a portion including the foreign matter is cut and removed. On the other hand, the portion corresponding to the shadow should not be removed; because, it is not a foreign matter. Thus, a shadow formed on a textile material may be erroneously detected as a foreign matter and a portion of the textile material corresponding to the shadow may be unnecessary removed. This is uneconomical and inefficient.

Structures for irradiating a textile material (yarn) with a light emitted from a light source and passed through a diffusion plate (diffusion disk) are disclosed in JPH 06507979 and JP 2005 068569. Irradiating a textile material with a light emitted from a light source and after being diffused by passing through a diffusion plate in this manner makes it possible to irradiate the textile material with light from various directions. Therefore, even when the textile material has surface irregularities, generation of shadows can be suppressed. The principle underlying this is the same as that although illuminating a substance with direct lighting projects a shadow at an edge (boundary surface) portion, no shadow is formed when the lighting is changed to indirect lighting. By suppressing the generation of the shadows as discussed above, a frequency of false detection of erroneously detecting a portion of a shadow as a foreign matter can be reduced.

Meanwhile, the detection of a thickness irregularity in a textile material by using transmitted light is performed by utilizing a fact that a change in an amount of received light of transmitted light depends on a thickness of the textile material. More specifically, the thicker the textile material is, the larger the area where light is shielded by the textile material is, and the less the amount of received light of the transmitted light is. Therefore, by monitoring a change in an amount of transmitted light, which is transmitted through a running textile material, variation in the thickness, or, in other words, a thickness irregularity, of the textile material in a running direction can be detected.

The inventor of the present invention is of the opinion that the textile-material monitoring device configured to diffuse light using the diffusion plate as in Japanese translation of PCT international publication for patent application No. H6-507979 and Japanese published unexamined application No. 2005-68569 have a problem that, as compared with a structure where a non-diffused light is used, accuracy in detection of a thickness irregularity of a textile material decreases. This problem has not been discussed either in JPH 06507979 or in JP 2005 068569. The present inventor has conducted extensive studies and found that a cause of the decrease in the accuracy in detection of the thickness irregularity of the textile material is that transmitted light beams to be received by a light receiving element are averaged out when the light is in a diffused state.

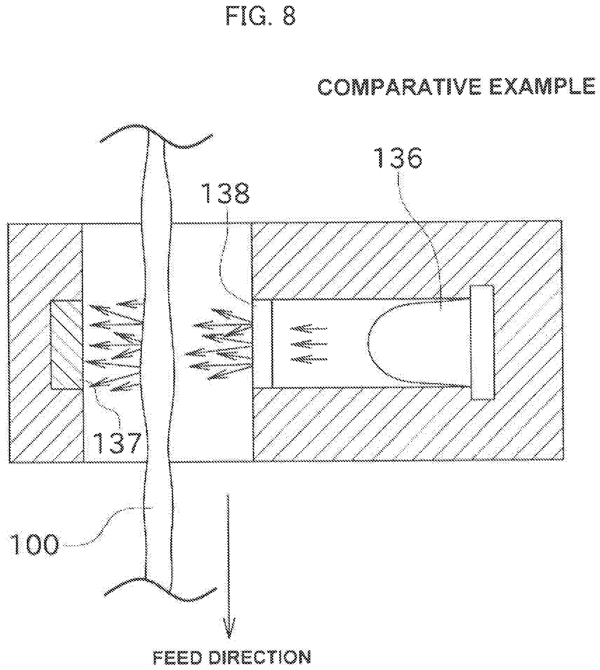

More specifically, as shown in FIG. 8, when a textile material 100 is irradiated with a light emitted from a light source 136 and diffused through a diffusion plate 138, a transmitted-light receiving element 137 receives transmitted light beams transmitted through the textile material 100 from various directions. Accordingly, an electrical signal output from the light receiving element 137 represents what is called an averaged intensity of intensities of the transmitted light beams from the various directions. When the transmitted light beams are averaged out in this way, fine detection of variation in thickness of the textile material 100 cannot be performed; as a result, accuracy in detection of a thickness irregularity of a textile material undesirably decreases.

JP 2006 329696 A discloses a line light guide in an inspection device for illuminating an inspection target with light of a light source passed through the emitting part of the line light guide and detecting the reflected light from the inspection target using a line CCD camera. A cylindrical lens and an anisotropic diffusing plate for diffusing light only in the longitudinal direction of the line light guide are provided to the emitting part of the line light guide.

US 2006/014085A1 teaches an anisotropic light diffusion adhesive layer including an adhesive material and an acicular filler whose refractive index is different from that of the adhesive material. The acicular filler is dispersed as oriented substantially in the same direction. The anisotropic light diffusion adhesive layer and anisotropic light diffusion adhesive laminated assembly may suitably be employed as an illumination device such as a backlight for a liquid crystal display device or the like.

The present invention has been made under the circumstances discussed above. It is an object of the present invention to provide a textile-material monitoring device having improved accuracy in detection of a foreign matter and that can detect a thickness irregularity of the textile material favorably.

The problem to be solved by the present invention is described above. Means for solving the problem and effects thereof are explained below.

### SUMMARY OF THE INVENTION

The invention provides a textile-material monitoring device according to claim 1.

According to an aspect of the present invention, there is provided a textile-material monitoring device including a light source unit that is adapted to emit light toward a running textile material; a transmitted-light receiving unit that is adapted to receive light that is emitted from the light source unit after being transmitted through the textile material; a reflected-light receiving unit that is adapted to receive light that is emitted from the light source unit after being reflected from the textile material; and a diffuser unit that is arranged between the light source unit and the textile material, and that is adapted to diffuse the light emitted from the light source unit. The diffuser unit is adapted to diffuse the light in a manner that a degree of light diffusion in a plane orthogonal to a running direction of the textile material is greater than a degree of light diffusion in a plane parallel to the running direction. The diffuser unit is an anisotropic diffusion sheet.

According to another aspect of the present invention, there is provided a yarn winding apparatus including a winding device that is adapted to wind a textile material into a package form; the above textile-material monitoring device for monitoring the textile material and outputting a result of monitoring; a detector that is adapted to detect one or more of a foreign matter and an anomalous thickness based on the result of the monitoring; and a defect removing unit that is adapted to remove a portion of one or more of the foreign matter and the anomalous thickness.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a schematic elevation view of an overall structure of a spinning machine according to a first embodiment of the present invention;
FIG. 2 is a schematic side view of a spinning unit shown in FIG. 1;
FIG. 3 is a cross-sectional plan view of a structure of a clearer shown in FIG. 2;
FIG. 4 is a cross-sectional view of the clearer taken along a plane parallel to a yarn feed direction and passing through a light source unit and a transmitted-light receiving unit;
FIG. 5 is a schematic diagram for explaining how light is diffused by an anisotropic diffusion sheet;
FIG. 6 is a schematic elevation view of a winder unit of an automatic winder according to a second embodiment of the present invention;
FIG. 7 is a cross-sectional view of a clearer according to a modification taken along the plane parallel to a yarn feed direction and passing through a light source unit and a transmitted-light receiving unit; and
FIG. 8 is a cross-sectional view of a conventional textile-material monitoring device taken along a plane parallel to a yarn feed direction and passing through a light source unit and a transmitted-light receiving unit.

### DETAILED DESCRIPTION OF THE PREFERRED EMBODIMENTS

Exemplary embodiments of the present invention are described in detail with reference to the drawings. A first embodiment of the present invention is described below.

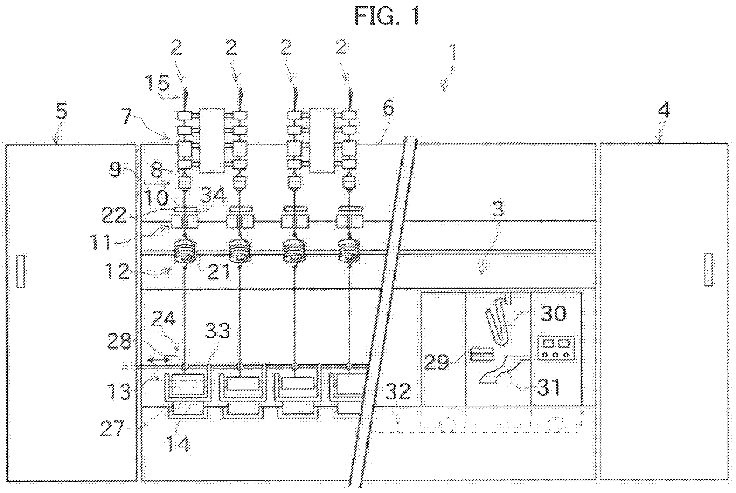

A spinning machine 1 illustrated in FIG. 1 serves as a yarn winding apparatus. The spinning machine 1 includes a plurality of spinning units 2 arranged side by side, a splicer carrier 3, a blower box 4, and a motor box 5.

Each of the spinning units 2 drafts a sliver 15 into a fiber bundle 8 and forms a spun yarn 10 by twisting the fiber bundle 8. Thereafter, the spinning unit 2 winds the spun yarn 10 to form a package 14. Each of the sliver 15, the fiber bundle 8, the spun yarn 10, and the like is a continuous thin fiber filament and hence can be generically referred to as "a textile material".

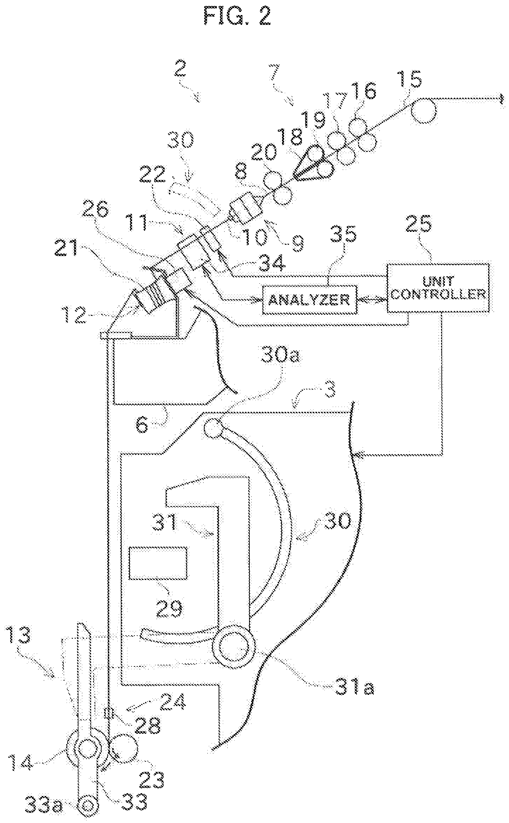

As illustrated in FIGS. 1 and 2, each of the spinning units 2 includes a drafting device 7, a spinning device 9, and a winding device 13, which are arranged from upstream to downstream in this order. As illustrated in FIG. 2, each of the spinning units 2 also includes a unit controller 25 for controlling the units provided in the spinning unit 2. Note that "upstream" and "downstream" used herein are upstream and downstream, respectively, with respect to a feed direction, or a running direction, of the spun yarn 10 during spinning.

The drafting device 7 that drafts the sliver 15 into the fiber bundle 8 is provided near a top end of a casing 6 of the spinning machine 1. As illustrated in FIG. 2, the drafting device 7 includes four pairs of rollers, or, more specifically, a pair of back rollers 16, a pair of third rollers 17, a pair of middle rollers 19, around each of which an apron belt 18 is laid, and a pair of front rollers 20. The sliver 15 is drafted by these rollers and the like into the fiber bundle 8.

The spinning device 9 twists the fiber bundle 8 fed from the drafting device 7 to form the spun yarn 10. Although a detailed structure of the spinning device 9 is not illustrated, in the first embodiment, an air-jet spinning type spinning device is adopted as the spinning device 9. More specifically, the spinning device 9 blows out compressed air into an interior space of the spinning device 9 to generate a swirling airflow, and causes the swirling airflow to impinge on the fiber bundle 8, thereby twisting the fiber bundle 8 to form the spun yarn 10.

A clearer head 34 is provided in a clearer (textile-material monitoring device) 11. The clearer head 34 is arranged at a position between the spinning device 9 and the winding device 13. The spun yarn 10 spun by the spinning device 9 is passed through the clearer head 34. The clearer 11 monitors whether a foreign matter is present in the running spun yarn 10, and monitors a thickness of the spun yarn 10. The clearer 11 transmits a yarn-defect detection signal to the unit controller 25 when a foreign matter and/or an anomalous thickness is detected.

Upon receiving the yarn-defect detection signal, the unit controller 25 causes a cutter (defect removing unit) 22 arranged near the clearer head 34 to cut the spun yarn 10 immediately. By performing this yarn cutting and splicing, which will be described later, the spinning unit 2 can remove a yarn defect portion included in the spun yarn 10. Accordingly, the spinning unit 2 can form the package 14 of a high quality free from yarn defects.

The winding device 13 winds the spun yarn 10 to form the package 14. The winding device 13 includes a cradle arm 33, a winding drum 23, and a traverse device 24. The cradle arm 33 is supported by a support shaft 33a to be pivotable about the support shaft 33a. The cradle arm 33 is capable of rotatably supporting a bobbin 27, on which the spun yarn 10 is to be wound.

The winding drum 23 is driven in contact with the bobbin 27 or an outer peripheral surface of the package 14 that is formed by winding the spun yarn 10 on the bobbin 27. The traverse device 24 includes a traverse guide 28, on which the spun yarn 10 can be hooked. In the winding device 13 configured as described above, an electric motor (not shown) rotates the winding drum 23 while the traverse guide 28 is reciprocated by a drive mechanism (not shown), thereby rotating the package 14 in contact with the winding drum 23 and winding the spun yarn 10 on the package 14 while traversing the spun yarn 10 across the surface of the package 14.

A yarn pooling device 12 is arranged between the clearer 11 and the winding device 13. The yarn pooling device 12 winds the spun yarn 10 formed by the spinning device 9 around a yarn pooling roller 21 to thereby temporarily pool the spun yarn 10.

The yarn pooling roller 21 is adapted to pool a predetermined amount of the spun yarn 10 by winding the spun yarn 10 on its outer peripheral surface. The yarn pooling roller 21 is rotated by an electric motor 26. By rotating the yarn pooling roller 21 with the spun yarn 10 wound on the outer peripheral surface of the yarn pooling roller 21, a predetermined tension can be applied to the spun yarn 10 on an upstream side relative to the yarn pooling device 12. Thus, the yarn pooling device 12 can draw out the spun yarn 10 from the spinning device 9 at a predetermined speed and transport the spun yarn 10 downstream at a predetermined speed.

As illustrated in FIGS. 1 and 2, the splicer carrier 3 includes a splicer (yarn splicing device) 29, a suction pipe 30, and a suction mouth 31. The splicer carrier 3 is configured such that when, in one of the spinning units 2, the spun yarn 10 is separated into two pieces, one on a side of the spinning device 9 and the other on a side of the package 14, due to yarn breakage or yarn cutting, the splicer carrier 3 travels on a rail 32 to a position in front of the corresponding spinning unit 2 where it can perform splicing. Although description about a detailed structure of the splicer 29 is omitted, for example, an air-jet spinning type spinning device that causes a swirling airflow to impinge on a yarn end on the side of the spinning device 9 and a yarn end on the side of the package 14 to thereby twist and join the yarn ends together can be used as the splicer 29.

Brief description about the splicing performed by the spinning unit 2 is given below. When yarn breakage or yarn cutting occurs in one of the spinning units 2, the unit controller 25 stops the drafting device 7, the spinning device 9, the winding device 13, and the like of the corresponding spinning unit 2. The unit controller 25 transmits a control signal to the splicer carrier 3. Upon receiving the control signal, the splicer carrier 3 travels to a position in front of the spinning unit 2. Thereafter, the unit controller 25 resumes driving of the drafting device 7, the spinning device 9, and the like and simultaneously causes the splicer carrier 3 to start splicing.

When splicing is started, the splicer carrier 3 causes the suction pipe 30 to vertically pivot about a shaft 30a to a position where the suction pipe 30 can suck and catch a yarn end fed from the spinning device 9, and carry the yarn end to the splicer 29. Approximately simultaneously with this operation, the splicer carrier 3 causes the suction mouth 31 to vertically pivot about a shaft 31a to a position where the suction mouth 31 can suck and catch a yarn end extending from the package 14 supported by the winding device 13, and carry the yarn end to the splicer 29. The splicer 29 splices the yarn ends carried to the splicer 29 to each other.

The yarn pooling device 12 successively winds the spun yarn 10, which is continuously fed from the spinning device 9, around the yarn pooling roller 21 to pool the spun yarn 10 until completion of the splicing performed by the splicer 29. This prevents slack in the spun yarn 10, which is fed from the spinning device 9, between the spinning device 9 and the splicer 29 during splicing.

When the splicing performed by the splicer 29 is completed, the unit controller 25 causes the winding device 13 to resume winding. By performing the splicing as described above, the spun yarn 10 separated into two pieces, one coming from the spinning device 9 and the other coming from the package 14, are connected and the spun yarn 10 is brought into a continuous state again. Winding of the spun yarn 10 into a package form is resumed after the spun yarn 10 is brought into the continuous state.

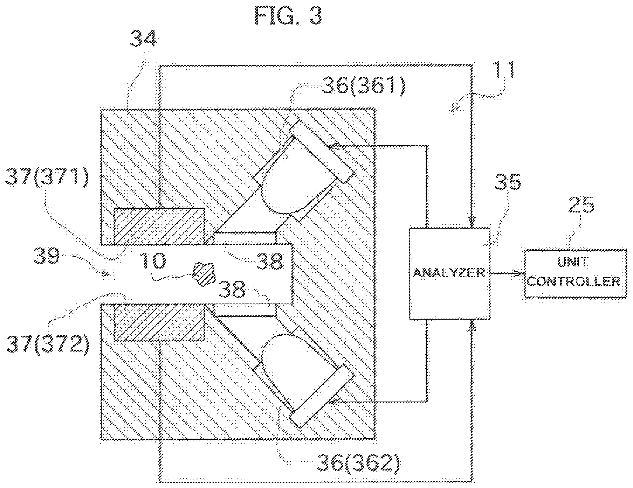

A structure of the clearer 11 is described below with reference to FIG. 3. The clearer 11 includes the clearer head 34 and an analyzer (detector) 35.

The clearer head 34 is implemented as a housing made of resin. A yarn passage (textile material passage) 39 for passage of the running spun yarn 10 is formed in the clearer head 34. A light source unit 36 and a light receiving unit 37 are arranged in the clearer head 34.

As illustrated in FIG. 3, the light source unit 36 includes two light emitting elements, or, more specifically, a first light emitting element 361 and a second light emitting element 362, while the light receiving unit 37 includes two light emitting elements, or, more specifically, a first light receiving element 371 and a second light receiving element 372. Each of the two light emitting elements 361 and 362 is implemented as a visible-ray light-emitting diode (LED). That is, the light emitting elements 361 and 362 emit visible light toward the spun yarn 10 running in the yarn passage 39. Each of the light receiving elements 371 and 372 is implemented as a photodiode, and that receives light, converts intensity of the received light into an electrical signal, and transmits the electrical signal to the analyzer 35. Meanwhile, a clearer of this type, i.e., a clearer that includes two light emitting elements, is referred to as a double-axis clearer in the current specification.

The analyzer 35 is implemented as a computer including a central processing unit (CPU), read only memory (ROM), and random access memory (RAM). The analyzer 35 detects a thickness irregularity and a foreign matter in the spun yarn 10 based on a monitoring result (the electrical signal) fed from the light receiving unit 37. Upon detection of an anomalous thickness of the spun yarn 10 or a foreign matter that needs to be removed, the analyzer 35 determines that a portion of the yarn corresponding to the anomalous thickness or the foreign matter is a yarn defect, and transmits a yarn-defect detection signal to the unit controller 25.

The first light emitting element 361 and the second light emitting element 362 are arranged so as to emit light from different angles toward the spun yarn 10 running in the yarn passage 39. The first light emitting element 361 and the second light emitting element 362 are controlled by the analyzer 35 so as to emit light alternately. This makes it possible to irradiate the spun yarn 10 with a light from two different directions. Put another way, such a double-axis clearer can multi-directionally monitor the spun yarn 10. Therefore, even when the spun yarn 10 has a flat cross-sectional profile in the cross section shown in FIG. 3, accuracy in detection of a foreign matter and a thickness irregularity of a yarn can be improved.

The first light receiving element 371 and the second light emitting element 362 are arranged on opposite sides of a yarn path of the spun yarn 10. Accordingly, the first light receiving element 371 receives light (transmitted light) emitted from the second light emitting element 362 and transmitted through the spun yarn 10. The second light receiving element 372, which is the other light receiving element, and the first light emitting element 361 are arranged on opposite sides of the yarn path of the spun yarn 10. Accordingly, the second light receiving element 372 receives light (transmitted light) emitted from the first light emitting element 361 and transmitted through the spun yarn 10.

The first light receiving element 371 is arranged such that the first light receiving element 371 is not directly irradiated with the light emitted from the first light emitting element 361 but can receive a light (reflected light) emitted from the first light emitting element 361 and reflected by the spun yarn 10. The second light receiving element 372 is arranged such that the second light receiving element 372 is not directly irradiated with the light emitted from the second light emitting element 362 but can receive a light (reflected light) emitted from the second light emitting element 362 and reflected by the spun yarn 10.

With this configuration, when the first light emitting element 361 is emitting light, the first light receiving element 371 and the second light receiving element 372 receive the reflected light and the transmitted light, respectively. When the second light emitting element 362 is emitting light, the first light receiving element 371 and the second light receiving element 372 receive the transmitted light and the reflected light, which are the reverse of those described above, respectively. Thus, the light receiving unit 37 provides both a function of receiving reflected light (function as a reflected-light receiving unit) and a function of receiving transmitted light (function as a transmitted-light receiving unit).

The transmitted light is the light that is partially transmitted through the spun yarn 10 on a way to being received by the light receiving elements 371 and 372; therefore, the intensity of the transmitted light varies depending on the thickness of the spun yarn 10. Accordingly, the analyzer 35 can detect a thickness irregularity of the spun yarn 10 by monitoring variations in the intensity of the transmitted light received by the light receiving elements 371 and 372.

The reflected light is the light reflected by the surface of the spun yarn 10 and then received by the light receiving elements 371 and 372; therefore, the intensity of the reflected light varies depending on a color of the surface of the spun yarn 10. Accordingly, the analyzer 35 can detect a foreign matter present in the spun yarn 10 by monitoring variations in the intensity of the reflected light received by the light receiving elements 371 and 372.

Meanwhile, the thicker the spun yarn 10 is, the larger the area where light is reflected by the spun yarn 10 is, and the higher the intensity of the reflected light is. Accordingly, the intensity of the light reflected by the spun yarn 10 varies depending additionally on the thickness of the spun yarn 10. Meanwhile, the light receiving elements 371 and 372 receive a light reflected by a portion (e.g., a wall surface of the yarn passage 39) other than the spun yarn 10, too. The thicker the spun yarn 10 is, the weaker the intensity of the light reflected by the portion other than the spun yarn 10 is. Accordingly, the light reflected by the portion other than the spun yarn 10 can cancel the variations in the intensity of the reflected light reflected by the spun yarn 10. Thus, the intensity of the reflected is unaffected by the variations in the thickness of the yarn; accordingly, the clearer 11 can detect a foreign matter with high accuracy. Although not shown, as a contrivance to suitably cancel variations in the intensity of light reflected by the spun yarn 10, a reflection plate having an appropriate reflectance is provided on the wall surface of the yarn passage 39.

A structure for diffusing light of the light source using diffuser members 38 is described below.

As illustrated in FIG. 3, the clearer 11 of the first embodiment includes two diffuser members (diffuser units) 38 for diffusing light, one is arranged at a position between the spun yarn 10 and the first light emitting element 361 and the other is arranged at a position between the spun yarn 10 and the second light emitting element 362. The clearer 11 is also configured such that light beams emitted from the light emitting elements 361 and 362 illuminate the spun yarn 10 through a corresponding one of the diffuser members 38. Accordingly, the clearer 11 can irradiate the spun yarn 10 with diffused light.

Conventionally, as a diffuser member for diffusing light, a filter, such as a ground glass or an opal glass, that diffuses light in all directions has been used. However, as discussed above, when the spun yarn 10 is irradiated with diffused light, transmitted light beams are undesirably averaged out, which disadvantageously decreases detection accuracy of the clearer 11 that detects a thickness irregularity of the spun yarn 10.

Meanwhile, a thickness irregularity of the spun yarn 10 is a barometer of how much the thickness of the spun yarn 10 varies in the feed direction of the spun yarn 10. Accordingly, for accurate detection of the thickness irregularity of the spun yarn 10, it is desirable that the clearer 11 be capable of detecting even minute variations in intensities of the transmitted light beams in the feed direction of the spun yarn 10. In this regard, however, when light is diffused by a ground glass or an opal glass in all directions, the intensities of transmitted light beams are undesirably averaged out in the feed direction of the spun yarn 10. Thus, a conventional clearer fails to detect minute variations in the intensities of transmitted light beams in the feed direction of the spun yarn 10. This results in a decrease in detection accuracy of such a clearer that detects a thickness irregularity of the spun yarn 10.

Accordingly, a decrease in detection accuracy of a clearer that detects a thickness irregularity of the spun yarn 10 can be prevented by preventing averaging out of the transmitted light beams in the feed direction of the spun yarn 10. This can be attained by preventing diffusion of light in a plane parallel to the feed direction of the spun yarn 10. Conversely, so long as light is diffused in a plane orthogonal to the feed direction of the spun yarn 10, averaging out of the transmitted light beams in the feed direction will not occur. In other words, even when light is diffused in the plane orthogonal to the feed direction of the spun yarn 10, detection accuracy of the clearer that detects a thickness irregularity of the spun yarn 10 does not decrease.

In view of the above fact, in the clearer 11 according to the first embodiment, the diffuser members 38 are configured to diffuse light such that a degree of light diffusion in the plane parallel to the yarn feed direction is smaller than a degree of light diffusion in the plane orthogonal to the yarn feed direction.

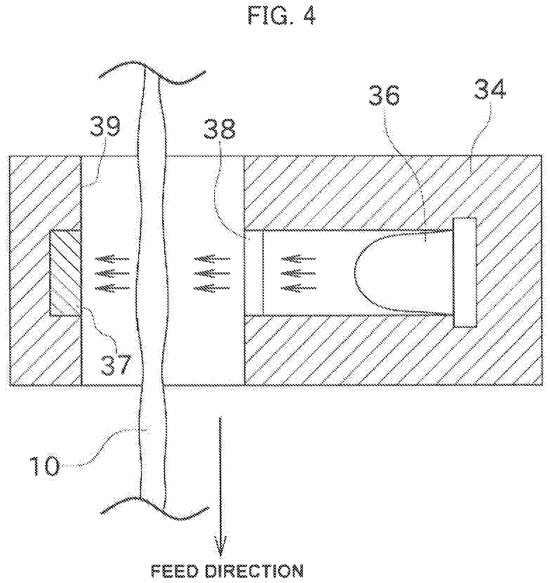

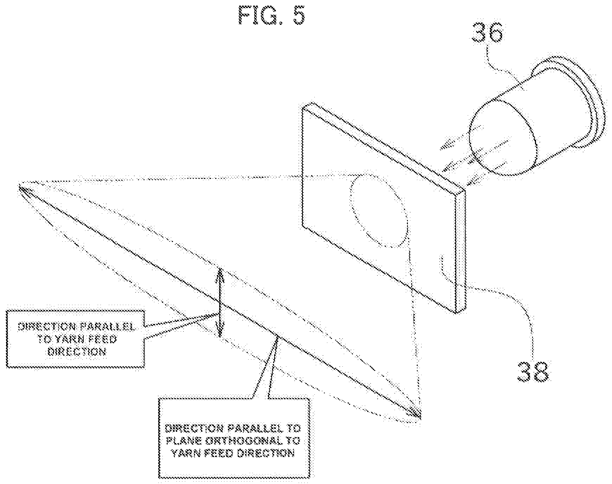

More specifically, each of the diffuser members 38 according to the first embodiment is implemented as an anisotropic diffusion sheet. Meanwhile, an existing, commercially available anisotropic diffusion sheet can be used as the diffuser member 38. Therefore, the clearer 11 can be constructed inexpensively. The diffusion sheet is arranged such that an angle of diffusion (the degree of light diffusion in the plane illustrated in FIG. 4) in the plane parallel to the yarn feed direction is smaller than an angle of diffusion (the degree of light diffusion in the plane illustrated in FIG. 3) in the plane orthogonal to the yarn feed direction. Generally, an anisotropic diffusion sheet diffuses light in an elliptical pattern as illustrated in FIG. 5. Accordingly, the diffusion sheet is desirably arranged such that the minor axis of the elliptical pattern lies substantially parallel to the yarn feed direction.

By arranging the diffusion sheets (diffuser members 38) in this way, the degree of light diffusion of the light source unit 36 can be reduced in the plane (the plane illustrated in FIG. 4) parallel to the feed direction of the spun yarn 10. Hence, light is less diffused in the feed direction of the spun yarn 10; accordingly, averaging out of the transmitted light beams to be received by the light receiving unit 37 in the feed direction of the spun yarn 10 can be prevented. Therefore, the clearer 11 can maintain favorable accuracy in detection of a thickness irregularity of the spun yarn 10.

Angles of diffusion of the diffusion sheet are not particularly limited to specific values; however, to prevent averaging out of the transmitted light beams to be received by the light receiving unit 37, the angle of diffusion (the degree of light diffusion in the plane illustrated in FIG. 4) in the plane parallel to the feed direction of the spun yarn 10 should preferably be as small as possible. In the clearer 11 according to the first embodiment, each of the light emitting elements 361 and 362 of the light source unit 36 is implemented as a parallel-ray LED that can emit parallel light. Accordingly, the light source unit 36 can illuminate the spun yarn 10 only from directions orthogonal to the feed direction as illustrated in FIG. 4. Therefore, averaging out of the transmitted light beams to be received by the light receiving unit 37 is prevented, and hence the clearer 11 can detect a thickness irregularity of the spun yarn 10 accurately.

Arranging the diffusion sheets (diffuser members 38) as discussed above causes light to diffuse in the plane (the plane illustrated in FIG. 3) orthogonal to the feed direction of the spun yarn 10; therefore, the spun yarn 10 can be irradiated with light from various directions parallel to this plane. As a result, shadows projected on the surface of the spun yarn 10 can be reduced. Therefore, the number of times when the spun yarn 10 is cut and removed due to false detection of erroneously detecting a portion of a shadow as a foreign matter can also be reduced. This leads to improvement in efficiency in production of the package 14 by the spinning unit 2.

As discussed above, shadows projected on the surface of the spun yarn 10 are reduced. Hence, a signal-to-noise (S/N) ratio of signals output from the light receiving unit 37 in response to receipt of reflected light can be increased. More specifically, when the spun yarn 10 is directly irradiated with undiffused light, even in a situation where no foreign matter is present in the spun yarn 10, the amount of reflected light received by the light receiving unit 37 undesirably varies minutely due to shadows formed by surface irregularities of the spun yarn 10. In short, when light is not diffused, a noise component of reflected light is large. However, irradiating the spun yarn 10 with diffused light as in the first embodiment eliminates shadows on the spun yarn 10; therefore, when no foreign matter is present in the spun yarn 10, the amount of reflected light received by the light receiving unit 37 does not vary minutely. In other words, by irradiating the spun yarn 10 with diffused light, a noise component of reflected light can be reduced. By virtue of the thus-increased S/N ratio, the analyzer 35 can detect a foreign matter present in the spun yarn 10 easily.

As discussed above, the clearer 11 according to the first embodiment provides a solution to the problem in the conventional technology by irradiating the spun yarn 10 with light diffused through the anisotropic diffusion sheet, thereby yielding an effect of reducing shadows to improve accuracy in detection of a foreign matter without sacrificing accuracy in detection of a thickness irregularity.

Furthermore, as illustrated in FIG. 3, in the clearer 11 according to the first embodiment, the diffuser members 38, and the light receiving elements 371 and 372 are arranged in a flat arrangement with substantially no difference in level relative to the wall surface of the yarn passage 39. In other words, each of a pair of the light receiving element 371 and a corresponding one of the diffuser members 38 and a pair of the light receiving element 372 and the other diffuser member 38 is arranged substantially flush with the wall surface of the yarn passage 39. This arrangement is advantageous in creating no surface irregularity of the yarn passage 39, causing less yarn waste and the like to be caught by the wall surface, thus increasing maintainability.

Arranging the diffuser member 38 and the wall surface of the yarn passage 39 substantially flush with each other causes the diffuser member 38 to partially form the wall surface of the yarn passage 39. In other words, in the clearer 11 according to the first embodiment, a space where the spun yarn 10 runs and each of spaces where the light emitting elements 361 and 362 are individually arranged, are separated by the diffuser member 38. By dividing the space where the spun yarn 10 runs and the spaces where the light emitting elements 361 and 362 are arranged in this way, adhesion of yarn waste and the like to the light emitting elements 361 and 362 generated by running of the spun yarn 10 can be prevented. As a result, maintainability is further increased.

Meanwhile, in a conventional clearer, as illustrated in, for example, FIG. 4 of Japanese published unexamined application No. 2005-68569, a light receiving element is arranged at an inner position away from a wall surface of a yarn passage. This arrangement is disadvantageous in that the light receiving element is distant from a yarn, and hence an amount of reflected light to be received by the light receiving element decreases. In contrast, in the clearer 11 according to the first embodiment, by arranging each of the light receiving elements 371 and 372 substantially flush with the wall surface of the yarn passage 39, the light receiving elements 371 and 372 can be arranged at positions as close as possible to the spun yarn 10. Accordingly, the light receiving elements 371 and 372 can receive reflected light, which is reflected from the spun yarn 10, that is not reduced in amount.

As described above, the clearer 11 according to the first embodiment includes the light source unit 36, the light receiving unit 37 that doubles as the transmitted-light receiving unit and the reflected-light receiving unit, and the diffuser members 38. The light source unit 36 emits light toward the running spun yarn 10. The light receiving unit 37 receives, of the light emitted from the light source unit 36, light transmitted through the spun yarn 10. The light receiving unit 37 receives, of the light emitted from the light source unit 36, light reflected from the spun yarn 10. The diffuser member 38 arranged between the light source unit 36 and the spun yarn 10 diffuses the light emitted from the light source unit 36. The diffuser member 38 is configured to diffuse the light such that the degree of light diffusion in the plane orthogonal to the feed direction of the spun yarn 10 is greater than the degree of light diffusion in the plane parallel to the yarn feed direction.

Put another way, the clearer 11 according to the first embodiment can illuminate the spun yarn 10 from various angles by irradiating the spun yarn 10 with diffused light. Accordingly, even when the spun yarn 10 has surface irregularities, it is possible to reduce shadows. Hence, the clearer 11 can detect a portion including a foreign matter accurately. The clearer 11 can prevent a false detection of erroneously detecting a portion of a shadow as a foreign matter because the clearer 11 reduces shadows as discussed above. The clearer 11 reduces the degree of light diffusion in the plane parallel to the feed direction of the spun yarn 10 so that the transmitted light beams are less averaged out in the feed direction of the spun yarn 10. As a result, the clearer 11 can detect variations in the thickness of the running spun yarn 10 accurately.

In the clearer 11 according to the first embodiment, the diffuser members 38 are anisotropic diffusion sheets.

Diffusing light with such an anisotropic diffusion sheet makes it possible to cause the degree of light diffusion in the plane parallel to the yarn feed direction to differ from the degree of light diffusion in the plane orthogonal to the yarn feed direction with a simple structure. Using a currently available diffusion sheet as the diffusion member 38 allows inexpensive construction of the clearer 11.

The clearer 11 according to the first embodiment includes the yarn passage 39 as a passage for the spun yarn 10. In the clearer 11, each of the pair of one of the diffuser members 38 and the light receiving element 371 and the pair of the other diffuser member 38 and the light receiving element 372 is arranged substantially flush with the wall surface of the yarn passage 39.

The light receiving elements 371 and 372 can be located close to the spun yarn 10 passing through the yarn passage 39. Accordingly, the light receiving unit 37 can receive reflected light that is not reduced in an amount. The space where the spun yarn 10 runs and the spaces where the light source unit 36 is arranged are separated by the diffuser members 38 because each of the diffuser members 38 partially forms the wall surface of the yarn passage 39. Accordingly, adhesion of yarn waste and the like to the light source unit 36 can be prevented.

The clearer 11 according to the first embodiment includes, as the light source unit 36, the two light emitting elements, or, more specifically, the first light emitting element 361 and the second light emitting element 362, and the two light receiving elements, or, more specifically, the first light receiving element 371 and the second light receiving element 372. The light emitting elements 361 and 362 alternately emit light toward the spun yarn 10 from different directions. Each of the light receiving elements 371 and 372 doubles as the transmitted-light receiving unit and the reflected-light receiving unit. Each of the light emitting elements 361 and 362 includes the diffuser member 38.

Thus, the clearer 11 can monitor the spun yarn 10 from the two different directions, thereby improving monitoring accuracy of the clearer 11.

In the clearer 11 according to the first embodiment, each of the light emitting elements 361 and 362 of the light source unit 36 is implemented as a parallel-ray LED that can emit parallel light.

Accordingly, averaging out of the transmitted light beams to be received by the light receiving elements 371 and 372 is prevented, and hence the clearer 11 can detect a thickness irregularity of the spun yarn 10 accurately.

The spinning machine 1 according to the first embodiment includes the winding devices 13 and the clearers 11 that include the analyzers 35 and the cutters 22. Each of the winding devices 13 winds the spun yarn 10 to form the package 14. Each of the clearers 11 monitors the spun yarn 10. Each of the analyzers 35 detects a foreign matter and an anomalous thickness based on a monitoring result output from the clearer 11. Each of the cutters 22 removes a portion of the foreign matter and/or the anomalous thickness.

The spinning machine 1 adopts the clearer 11 of the present invention. Accordingly, the spinning machine 1 can prevent unnecessary removal of yarn resulting from an erroneous detection of a portion of a shadow as a foreign matter. Furthermore, the spinning machine 1 can detect a thickness irregularity of the spun yarn 10 with favorable accuracy. Accordingly, the spinning machine 1 can form the package 14 of a high quality, from which portions of a foreign matter and an anomalous thickness of the spun yarn 10 are removed. Furthermore, the spinning machine 1 can form the package 14 efficiently because the spinning machine 1 can prevent the unnecessary removal.

A second embodiment of the present invention is described below.

In the second embodiment, the textile-material monitoring device of the present invention is applied to an automatic winder serving as a yarn winding apparatus. A structure of the automatic winder is described below. Structures identical or similar to those of the first embodiment are denoted by like reference numerals as those of the first embodiment and repeated descriptions are omitted in some cases.

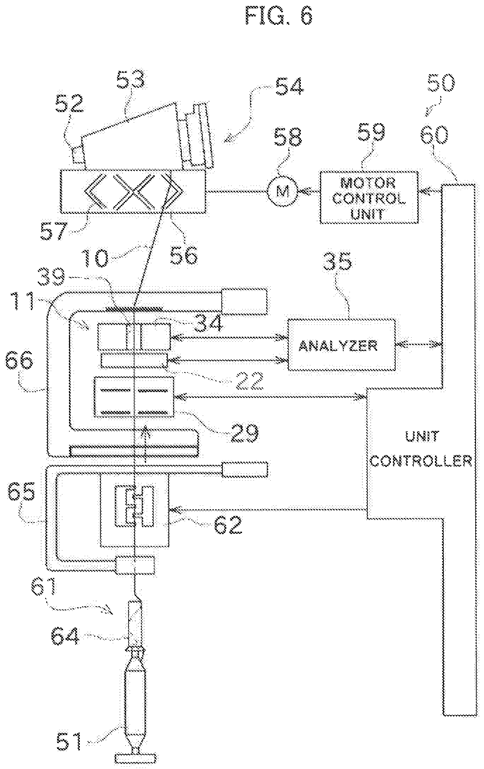

The automatic winder according to the second embodiment includes a plurality of winder units 50 arranged in a line and a machine control device (not shown) arranged at one end of the line. As illustrated in FIG. 6, each of the winder units 50 winds the spun yarn (textile material) 10 unwound from a yarn feeding bobbin 51 on a winding bobbin 52 while traversing the spun yarn 10 to form a package 53 of a predetermined length and shape.

A winding device 54 provided in each of the winder units 50 is configured to wind the spun yarn 10 unwound from the yarn feeding bobbin 51 around the winding bobbin 52 to form the package 53. More specifically, the winding device 54 includes a winding drum 56 that causes the spun yarn 10 to traverse and that drives the winding bobbin 52. As illustrated in FIG. 6, a helical traversing groove 57 is provided in an outer circumferential surface of the winding drum 56 and it causes the spun yarn 10 to traverse.

The winding bobbin 52 is driven by rotation of the winding drum 56 arranged to face the winding bobbin 52. The spun yarn 10 is wound around the rotating winding bobbin 52 while being traversed by the traversing groove 57. As illustrated in FIG. 6, the winding drum 56 is coupled to an output shaft of a drum driving motor 58. Operations of the drum driving motor 58 are controlled by a motor control unit 59. The motor control unit 59 receives a control signal from a unit controller 60 and rotates or stops the drum driving motor 58 according to the control signal.

The winder unit 50 includes an unwinding assisting device 61, a tensioning device 62, the splicer 29, and the clearer head 34 of the clearer (textile-material monitoring device) 11 that are arranged on a yarn feed path between the yarn feeding bobbin 51 and the winding drum 56 in this order from the side of the yarn feeding bobbin 51.

The unwinding assisting device 61 includes a restricting member 64. The restricting member 64 comes into contact with a balloon that is formed above the yarn feeding bobbin 51 by the spun yarn 10 that is unwound from the yarn feeding bobbin 51 and swung around, thereby applying an appropriate magnitude of tension onto the balloon. More specifically, the unwinding assisting device 61 assists unwinding of the spun yarn 10 from the yarn feeding bobbin 51 by lowering the restricting member 64 that covers a core tube in synchronization with unwinding of the spun yarn 10 from the yarn feeding bobbin 51.

The tensioning device 62 applies a predetermined tension to the running spun yarn 10. As the tensioning device 62, for example, a gate type tensioning device, in which movable comb teeth are arranged in combination with fixed comb teeth, can be used. A rotary solenoid may be used to rotate the movable comb teeth so that the movable comb teeth are placed in any one of a state where the comb teeth are in engagement and a state where the comb teeth are out of engagement. The tensioning device 62 can increase quality of the package 53 by applying a constant tension onto the spun yarn 10 being wound on the package 53. Meanwhile, the tensioning device 62 is not limited to the gate type discussed above, and other tension applying device, such as that of a disc type, can alternatively be employed.

The clearer 11, which has the same configuration as in the first embodiment, includes the clearer head 34 and the analyzer (detector) 35. The spun yarn 10 runs in the yarn passage 39 formed in the clearer head 34. The analyzer 35 detects a thickness irregularity and/or a foreign matter in the spun yarn 10 based on a monitoring result fed from the light receiving unit 37 (not shown in FIG. 6) provided in the clearer head 34. Upon detection of an anomalous thickness of the spun yarn 10 and/or a foreign matter that needs to be removed, the analyzer 35 determines that a portion of the anomalous thickness and/or the foreign matter is- a yarn defect, and transmits a yarn-defect detection signal to the unit controller 60.

The cutter (defect removing unit) 22 is annexed to the clearer head 34 at a position near the clearer head 34. On detecting a yarn defect, the analyzer 35 immediately actuates the cutter 22 to cut the spun yarn 10. Note that the cutter 22 can be controlled by the unit controller 60 rather than by the analyzer 35.

The splicer 29 splices a lower yarn coming from the yarn feeding bobbin 51 and an upper yarn coming from the package 53 when the clearer 11 cuts the spun yarn 10 on detection of a yarn defect, a situation where yarn breakage occurs during unwinding from the yarn feeding bobbin 51, or the like situation. A suction pipe 65 and a suction mouth 66 are provided below and above the splicer 29. When a yarn breakage occurs, the suction pipe 65 catches a yarn end coming from the yarn feeding bobbin 51 and brings the yarn end to the splicer 29, while the suction mouth 66 catches a yarn end coming from the package 53 and brings the yarn end to the splicer 29.

As discussed above, the automatic winder according to the second embodiment includes the winding devices 54, and the clearers 11 that include the analyzers 35 and the cutters 22. Each of the winding devices 54 winds the corresponding spun yarn 10 to form the package 53. Each of the clearers 11 monitors the corresponding spun yarn 10. Each of the analyzers 35 detects a foreign matter and/or an anomalous thickness based on a monitoring result output from the clearer 11. Each of the cutters 22 removes a portion of the foreign matter and/or the anomalous thickness.

The automatic winder adopts the clearer 11 of the present invention; accordingly, the automatic winder can prevent unnecessary removal of yarn resulting from an erroneous detection of a portion of a shadow as a foreign matter. Furthermore, the automatic winder can detect a thickness irregularity of the spun yarn 10 with favorable accuracy. Thus, the automatic winder can form the package 53 of a high quality, from which portions of a foreign matter and an anomalous thickness of the spun yarn 10 are removed. Furthermore, the automatic winder can form the package 53 efficiently because the automatic winder can prevent the unnecessary removal.

The preferred embodiments of the present invention are described above; however, the structures discussed above can be modified as described below, for example.

In the embodiments, the clearer monitors a spun yarn; however, a subject of the monitoring is not limited thereto. Alternatively, other textile material, such as a sliver or a fiber bundle, than a spun yarn may be monitored with the textile-material monitoring device according to the present invention. A sliver or a fiber bundle also has surface irregularities. Accordingly, the effect of the present invention that, by monitoring a sliver or a fiber bundle with the textile-material monitoring device according to the present invention that irradiates it with diffused light, shadows are reduced and hence a foreign matter is detected with high accuracy can be yielded as well.

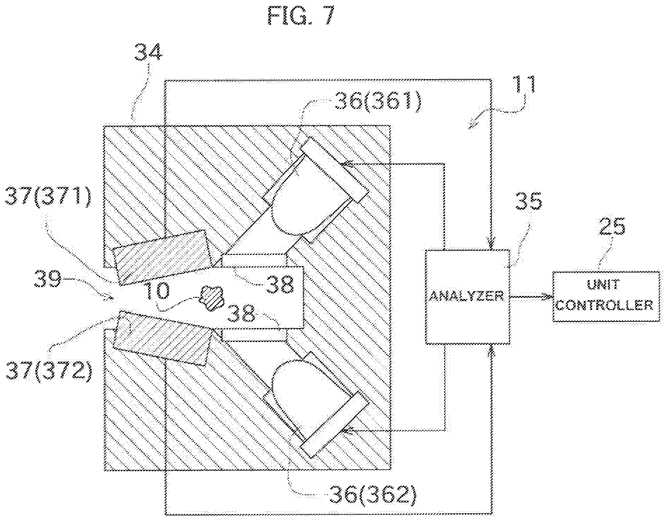

In the embodiments, the light receiving elements are each arranged flush with the wall surface of the yarn passage, however, arrangement of the light receiving elements is not limited thereto. For example, as illustrated in FIG. 7, an arrangement can be employed where the light receiving elements 371 and 372 are diagonal relative to the wall surface of the yarn passage 39 such that light receiving surfaces of the light receiving elements 371 and 372 face the spun yarn 10. By causing the light receiving surfaces of the light receiving elements 371 and 372 to face the spun yarn 10, an angle at which each of the light receiving elements 371 and 372 receives transmitted light and reflected light can be made close to the right angle. Accordingly, performance in detection of transmitted light and reflected light can be further increased. By arranging the light receiving elements in a manner to project from the wall surface of the yarn passage as illustrated in FIG. 7, the light receiving elements can be located still closer to the spun yarn. This allows the light receiving elements to receive reflected light that is not reduced in amount.

The clearer according to the embodiments is of a double-axis type that causes the two light emitting elements to emit light alternately. However, the structure of the present invention is applicable to a single-axis clearer that includes only a single light emitting element. A clearer of the single-axis type causes the single light emitting element to emit light constantly. Accordingly, unlike the double-axis clearer, in the single-axis clearer, switching of a light receiving element that receives transmitted light and a light receiving element that receives reflected light does not occur. More specifically, the single-axis clearer includes a light emitting element (reflected-light receiving unit) that receives only reflected light and a light emitting element (transmitted-light receiving unit) that receives only transmitted light. Also in the clearer of this type, by irradiating a textile material with light emitted from the light emitting element and diffused through an anisotropic diffusion sheet, averaging out of the transmitted light beams to be received by the transmitted-light receiving unit can be prevented. Thus, applying the structure according to the present invention to a single-axis clearer allows the single-axis clearer to yield the effect of the present invention of maintaining favorable accuracy in detection of a thickness irregularity of a yarn.

In the embodiments, the diffuser member is described as being a diffusion sheet; however, the diffuser member is not limited thereto. More specifically, any member capable of causing a certain degree of light diffusion in a plane parallel to a feed direction of a textile material to differ from that in a plane orthogonal to the feed direction can be adopted as the diffuser member in the textile-material monitoring device according to the present invention. The diffuser member is not necessarily a separate member from the clearer head. For example, the diffuser member may be a portion of the clearer head 34 that is formed of a transparent resin and that exhibits anisotropic light diffusion property, which is imparted to the transparent resin portion by applying appropriate surface treatment or the like. The diffuser member and the clearer head may be formed in one piece in this manner.

In the embodiments, the visible-ray LED is used as the light source; however, an infrared-ray LED or an ultraviolet-ray LED can alternatively be used. The light source is not limited to an LED, and any appropriate light-emitting device can be used as the light source.

In the embodiments, the light source unit 36 uses the parallel-ray LEDs; however, light to be emitted from each of the light emitting elements 361 and 362 is not limited to parallel light, and can alternatively be substantially-parallel light or light of which direction of illumination is not limited. For example, an ordinary LED (other than a parallel-ray LED) can be used as each of the light emitting elements 361 and 362. However, in terms of improvement of accuracy in detection of a thickness irregularity of a yarn, light from the light source unit 36 is preferably undiffused. Accordingly, it is desirable that the light from the light source unit 36 be as close as possible to parallel light.

In the spinning unit 2 according to the first embodiment, the spun yarn 10 is drawn out from the spinning device 9 by the yarn pooling device 12; however, the structure for drawing out the spun yarn 10 is not limited thereto. For example, the textile-material monitoring device according to the present invention may be applied to a spinning machine configured such that the spun yarn 10 is drawn out from the spinning device 9 by delivery rollers and nip rollers and thereafter the spun yarn 10 is pooled by the yarn pooling device 12 provided on a downstream side. When the structure where the spun yarn 10 is to be drawn out from the spinning device 9 by the delivery rollers and the nip rollers is employed, the yarn pooling device 12 may be omitted.

In the first embodiment and the second embodiment, the defect removing unit is implemented as the cutter 22; however, any structure that can remove a yarn defect can be used as the defect removing unit in place of the cutter 22. For example, the first embodiment can alternatively be configured such that, on detection of a foreign matter or a thickness irregularity of the spun yarn 10, the clearer 11 stops driving of the drafting device 7 with the winding device 13 continuing driving so that the spun yarn 10 is cut in a torn off manner. In this configuration, the winding device 13 and the drafting device 7 can be considered as the defect removing unit.

In the second embodiment, the automatic winder is configured such that the package is rotated by rotation of the winding drum while a yarn is traversed across the surface of the package; however, the configuration of the automatic winder is not limited thereto. Alternatively, the automatic winder can have a configuration where driving of the package and traversing are performed independent of each other. Examples of such an automatic winder includes an automatic winder that includes an arm-type traverse device that performs yarn traversing using a swiveling arm or a belt-driven traverse device that performs yarn traversing using a yarn-hook member that is laterally reciprocated by a belt. When such an automatic winder is used, the automatic winder can be configured such that a package is directly rotated by a motor, while a contact roller, on which a traverse mechanism is not provided, is driven by the package.

Application of the textile-material monitoring device according to the present invention is not limited to a spinning machine or an automatic winder; the textile-material monitoring device is also applicable to a yarn winding apparatus of other type.

According to an aspect of the present invention, there is provided a textile-material monitoring device including a light source unit that emits light toward a running textile material; a transmitted-light receiving unit that receives light that is emitted from the light source unit after being transmitted through the textile material; a reflected-light receiving unit that receives light that is emitted from the light source unit after being reflected from the textile material; and a diffuser unit that is arranged between the light source unit and the textile material, and that diffuses the light emitted from the light source unit. The diffuser unit diffuses the light in a manner that a degree of light diffusion in a plane orthogonal to a running direction of the textile material is greater than a degree of light diffusion in a plane parallel to the running direction.

According to the above aspect, the textile-material monitoring device can illuminate a textile material from various angles by irradiating the textile material with diffused light. Accordingly, even when the textile material has surface irregularities, the textile-material monitoring device can reduce shadows and hence can detect a portion including a foreign matter accurately. The textile-material monitoring device can also prevent a false detection of erroneously detecting a portion of a shadow as a foreign matter because the textile-material monitoring device reduces shadows as discussed above. The textile-material monitoring device reduces the degree of light diffusion in the plane parallel to the running direction of the textile material so that transmitted light beams are less averaged out in the running direction of the textile material. Thus, the textile-material monitoring device can detect a thickness irregularity of the running textile material accurately.

According to another aspect of the present invention, the textile-material monitoring device diffuses light using such an anisotropic diffusion sheet.

Accordingly, the textile-material monitoring device can cause the degree of light diffusion in the plane parallel to the running direction of the textile material to differ from the degree of light diffusion in the plane orthogonal to the running direction with a simple structure. Using a currently available diffusion sheet as the diffuser unit allows inexpensive construction of the textile-material monitoring device.

According to still another aspect of the present invention, the textile-material monitoring device further includes a textile material passage as a passage for the textile material. The textile material passage includes a wall surface, and the reflected-light receiving unit and the diffuser unit are arranged substantially flush with the wall surface of the textile material passage.

When such an arrangement is made, the reflected-light receiving unit can be located close to the textile material passing through the textile material passage. Accordingly, the textile-material monitoring device can cause the reflected-light receiving unit to receive reflected light that is not reduced in amount. Furthermore, a space where the textile material runs and spaces where the light source units are arranged are separated by the diffuser unit because the diffuser unit partially forms the wall surface of the textile material passage. Accordingly, the textile-material monitoring device can prevent adhesion of yarn waste and the like to the light source unit.

According to still another aspect of the present invention, the light source unit includes two light emitting elements serving as the light source unit, the transmitted-light receiving unit and the reflected-light receiving unit are two light receiving elements, each of the light receiving elements doubling as the transmitted-light receiving unit and the reflected-light receiving unit, the two light emitting elements are configured to alternately emit light toward the textile material from different directions, and each of the two light emitting elements includes the diffuser unit.

Accordingly, the textile-material monitoring device can monitor the textile material from the two different directions, and hence can improve monitoring accuracy.

According to still another aspect of the present invention, the light source unit emits parallel light toward the textile material.

According to the above aspect, it is possible to prevent averaging out of the transmitted light beams to be received by the transmitted-light receiving unit in the running direction of the textile material. Accordingly, the textile-material monitoring device can detect a thickness irregularity of the textile material accurately.

According to still another aspect of the present invention, there is provided a yarn winding apparatus including a winding device that winds a textile material into a package form; the above textile-material monitoring device for monitoring the textile material and outputting a result of monitoring; a detector that detects one or more of a foreign matter and an anomalous thickness based on the result of the monitoring; and a defect removing unit that removes a portion of one or more of the foreign matter and the anomalous thickness.

According to the above aspect, the yarn winding apparatus can prevent unnecessary removal resulting from a false detection of erroneously detecting a portion of a shadow as a foreign matter. Furthermore, the yarn winding apparatus can detect a thickness irregularity of the textile material with favorable accuracy. Accordingly, the yarn winding apparatus can form a package of a high quality, from which portions of a foreign matter and an anomalous thickness of the textile material are removed. Furthermore, the yarn winding apparatus can form the package efficiently because the yarn winding apparatus can prevent the unnecessary removal.

## Claims

1. A textile-material monitoring device (11) comprising:
a light source unit (36) that is adapted to emit light toward a running textile material (10);
a transmitted-light receiving unit (37) that is adapted to receive light that is emitted from the light source unit (36) after being transmitted through the textile material (10);
a reflected-light receiving unit (37) that is adapted to receive light that is emitted from the light source unit (36) after being reflected from the textile material (10); and
a diffuser unit (38) that is arranged between the light source unit (36) and the textile material (10), and that is adapted to diffuse the light emitted from the light source unit (36), wherein
the diffuser unit (38) is adapted to diffuse the light in a manner that a degree of light diffusion in a plane orthogonal to a running direction of the textile material (10) is greater than a degree of light diffusion in a plane parallel to the running direction,
**characterized in that** the diffuser unit (38) is an anisotropic diffusion sheet.

2. The textile-material monitoring device (11) according to Claim 1, further comprising a textile material passage (39) as a passage for the textile material (10), wherein
the textile material passage (39) includes a wall surface, and
the reflected-light receiving unit (37) and the diffuser unit (38) are arranged substantially flush with the wall surface of the textile material passage (39).

3. The textile-material monitoring device (11) according to any one of Claims 1 and 2, wherein
the light source unit (36) includes two light emitting elements (361,362) serving as the light source unit,
the transmitted-light receiving unit (37) and the reflected-light receiving unit (37) are two light receiving elements, each of the light receiving elements doubling as the transmitted-light receiving unit (37) and the reflected-light receiving unit (37),
the two light emitting elements (361,362) are configured to alternately emit light toward the textile material (10) from different directions, and
each of the two light emitting elements (361,362) includes the diffuser unit (38).

4. The textile-material monitoring device (11) according to any one of Claims 1 to 3, wherein the light source unit (36) is adapted to emit parallel light toward the textile material (10).

5. A yarn winding apparatus (1) comprising:
a winding device that is adapted to wind a textile material (10) into a package (14) form;
the textile-material monitoring device (11) according to any one of Claims 1 to 4 for monitoring the textile material (10) and outputting a result of monitoring;
a detector (35) that is adapted to detect one or more of a foreign matter and an anomalous thickness based on the result of the monitoring; and
a defect removing unit (22) that is adapted to remove a portion of one or more of the foreign matter and the anomalous thickness.

## Patentansprüche

1. Eine Textilmaterialüberwachungsvorrichtung (11), die folgende Merkmale aufweist:
eine Lichtquelleneinheit (36), die dazu angepasst ist, Licht in Richtung eines laufenden Textilmaterials (10) zu emittieren;
eine Empfangseinheit für durchgelassenes Licht (37), die dazu angepasst ist, Licht zu empfangen, das von der Lichtquelleneinheit (36) emittiert wird, nachdem dasselbe durch das Textilmaterial (10) durchgelassen wurde;
eine Empfangseinheit für reflektiertes Licht (37), die dazu angepasst ist, Licht zu empfangen, das von der Lichtquelleneinheit (36) emittiert wird, nachdem dasselbe von dem Textilmaterial (10) reflektiert wurde; und
eine Diffusoreinheit (38), die zwischen der Lichtquelleneinheit (36) und dem Textilmaterial (10) angeordnet ist und die dazu angepasst ist, das von der Lichtquelleneinheit (36) emittierte Licht zu zerstreuen, wobei
die Diffusoreinheit (38) dazu angepasst ist, das Licht auf eine Weise zu zerstreuen, dass ein Ausmaß der Lichtdiffusion in einer zu einer Laufrichtung des Textilmaterials (10) senkrechten Ebene größer als ein Ausmaß der Lichtdiffusion in einer zu der Laufrichtung parallelen Ebene ist,
**dadurch gekennzeichnet, dass** die Diffusoreinheit (38) eine anisotrope Diffusionsschicht ist.

2. Die Textilmaterialüberwachungsvorrichtung (11) gemäß Anspruch 1, die ferner einen Textilmaterialdurchlass (39) als Durchlass für das Textilmaterial (10) aufweist, wobei
der Textilmaterialdurchlass (39) eine Wandoberfläche umfasst und
die Empfangseinheit für reflektiertes Licht (37) und die Diffusoreinheit (38) im Wesentlichen bündig mit der Wandoberfläche des Textilmaterialdurchlasses (39) angeordnet sind.

3. Die Textilmaterialüberwachungsvorrichtung (11) gemäß einem der Ansprüche 1 und 2, wobei
die Lichtquelleneinheit (36) zwei lichtemittierende Elemente (361, 362) umfasst, die als die Lichtquelleneinheit dienen,
die Empfangseinheit für durchgelassenes Licht (37) und die Empfangseinheit für reflektiertes Licht (37) zwei lichtempfangene Elemente sind, wobei jedes der lichtempfangenden Elemente doppelt als Empfangseinheit für durchgelassenes Licht (37) und Empfangseinheit für reflektiertes Licht (37) dient,
die zwei lichtemittierenden Elemente (361, 362) dazu konfiguriert sind, abwechselnd aus unterschiedlichen Richtungen Licht in Richtung des Textilmaterials (10) zu emittieren, und
jedes der zwei lichtemittierenden Elemente (361, 362) die Diffusoreinheit (38) umfasst.

4. Die Textilmaterialüberwachungsvorrichtung (11) gemäß einem der Ansprüche 1 bis 3, wobei die Lichtquelleneinheit (36) dazu angepasst ist, Licht in Richtung des Textilmaterials (10) parallel zu emittieren.

5. Ein Garnwickelapparat (1), der folgende Merkmale aufweist:
eine Wickelvorrichtung, die dazu angepasst ist, ein Textilmaterial (10) in Form eines Wickelkörpers (14) zu wickeln;
die Textilmaterialüberwachungsvorrichtung (11) gemäß einem der Ansprüche 1 bis 4 zum Überwachen des Textilmaterials (10) und zum Ausgeben eines Überwachungsergebnisses;
einen Detektor (35), der dazu angepasst ist, einen oder mehrere eines Fremdkörpers und einer anormalen Dicke auf Basis des Überwachungsergebnisses zu erfassen; und
eine Defektentfernungseinheit (22), die dazu angepasst ist, einen Abschnitt eines oder mehrerer der Fremdkörper und der anormalen Dicke zu entfernen.

## Revendications

1. Dispositif de surveillance (11) de matériau textile, comprenant:
une unité de source de lumière (36) qui est adaptée pour émettre de la lumière vers un matériau textile (10) en défilement;
une unité de réception de lumière transmise (37) qui est adaptée pour recevoir la lumière qui est émise par l'unité de source de lumière (36) après avoir été transmise à travers le matériau textile (10);
une unité de réception de lumière réfléchie (37) qui est adaptée pour recevoir la lumière qui est émise par l'unité de source de lumière (36) après avoir été réfléchie par le matériau textile (10); et
une unité de diffusion (38) qui est disposée entre l'unité de source de lumière (36) et le matériau textile (10), et qui est adaptée pour diffuser la lumière émise par l'unité de source de lumière (36),
dans lequel
l'unité de diffusion (38) est adaptée pour diffuser la lumière de manière telle qu'un degré de diffusion de lumière dans un plan orthogonal à une direction de défilement du matériau textile (10) soit supérieur à un degré de diffusion de lumière dans un plan parallèle à la direction de défilement,
**caractérisé par le fait que** l'unité de diffusion (38) est une feuille de diffusion anisotrope.

2. Dispositif de surveillance de matériau textile (11) selon la revendication 1, comprenant par ailleurs un passage de matériau textile (39) comme passage pour le matériau textile (10), dans lequel
le passage de matériau textile (39) comporte une surface de paroi, et
l'unité de réception de lumière réfléchie (37) et l'unité de diffusion (38) sont disposées sensiblement à fleur de la surface de la paroi du passage de matériau textile (39).

3. Dispositif de surveillance de matériau textile (11) selon l'une quelconque des revendications 1 et 2, dans lequel
l'unité de source lumineuse (36) comporte deux éléments électroluminescents (361, 362) servant d'unité de source de lumière,
l'unité de réception de lumière transmise (37) et l'unité de réception de lumière réfléchie (37) sont deux éléments de réception de lumière, chacun des éléments de réception de lumière servant d'unité de réception de lumière transmise (37) et d'unité de réception de lumière réfléchie (37),
les deux éléments électroluminescents (361, 362) sont configurés pour émettre alternativement de la lumière vers le matériau textile (10) à partir de directions différentes, et
chacun des deux éléments électroluminescents (361 362) comporte l'unité de diffusion (38).

4. Dispositif de surveillance de matériau textile (11) selon l'une quelconque des revendications 1 à 3, dans lequel l'unité de source de lumière (36) est adaptée pour émettre une lumière parallèle vers le matériau textile (10).

5. Appareil de bobinage de fil (1), comprenant:
un dispositif d'enroulement qui est adapté pour enrouler un matériau textile (10) en forme de paquet (14);
le dispositif de surveillance de matériau textile (11) selon l'une quelconque des revendications 1 à 4 destiné à surveiller le matériau textile (10) et à sortir un résultat de surveillance;
un détecteur (35) qui est adapté pour détecter une ou plusieurs parmi des substances étrangères et une épaisseur anormale sur base du résultat de la surveillance; et
une unité d'élimination de défauts (22) qui est adaptée pour éliminer une partie de l'une ou plusieurs parmi les substances étrangères et l'épaisseur anormale.
